# EUROPEAN PATENT SPECIFICATION

(11) **EP 2 936 244 B1**
(45) Date of publication and mention of the grant of the patent: **10.07.2019**
(21) Application number: 13814474.6
(22) Date of filing: 06.12.2013
(51) Int. Cl.: G02F 1/1337, G02F 1/00

(54) **METHOD FOR THE PLANAR PHOTOALIGNMENT**
VERFAHREN FÜR PLANARE LICHTAUSRICHTUNG
PROCÉDÉ POUR LE PHOTOALIGNEMENT PLANAIRE

(30) Priority: 21.12.2012 EP 12198799
(43) Date of publication of application: 28.10.2015
(73) Proprietor: ROLIC Technologies AG, 4123 Allschwill (CH)
(72) Inventor: ECKERT, Jean-François, F-67750 Kientzville (FR); PALIKA, Satish, CH-4800 Zofingen (CH); TANG, Qian, CH-4104 Oberwil (CH)
(74) Representative: Veenstra, Eva
(86) International application number: PCT/EP2013/075753
(87) International publication number: WO 2014/095414

(56) References cited:
- EP-A1- 1 715 372
- US-A1- 2006 257 649
- US-A1- 2010 141 873
- US-A1- 2012 268 692

## Description

The present invention relates to a method for the planar photoalignment of liquid crystals by using at least an aligning polymer and at least a polymerizable monomer. In addition, the present invention relates to a polymerizable monomer, to a composition comprising said aligning polymer and said polymerizable monomer and its use for alignment layers in optical, electro optical or optoelectronic devices, especially liquid crystal devices (LCDs), more especially in LCDs having IPS mode.

There is a high demand from the market to provide alignment layers for the orientation of liquid crystals showing good optical, elctrooptical or optoelectronic properties. Especially for liquid crystal devices, LCDs, there are high quality standards required, such as good stability, high contrast, good voltage holding ratios. One of the main issues for the IPS mode of LCDs is image sticking.

The present invention relates to a method for the preparation of an alignment layer for the planar alignment of liquid crystals in a liquid crystal display, LCD, comprising
- forming a layer on a substrate by bringing into contact a composition comprising an aligning polymer and a polymerizable monomer with said substrate,
- irradiating said layer with aligning light, whereby an alignment layer is formed, preferably irradiating while no voltage is applied,
- bringing into contact said alignment layer with a liquid crystal composition;
   preferably, wherein the liquid crystal composition does or does not comprise a polymerizable monomer according to the present invention, or a polymer or oligomer, of said polymerizable monomer; and more
   preferred, wherein the liquid crystal composition does not comprise a polymerizable monomer according to the present invention, or a polymer or oligomer, which is the polymerized form of said polymerizable monomer;
- optionally irradiating said alignment layer which will be in contact with a liquid crystal composition,
- assembling a liquid crystal cell, preferably by using at least one of said alignment layer and a liquid crystal composition,
- irradiating said liquid crystal cell; preferably irradiating while no voltage is applied.

In the context of the present invention the wording "planar alignment" has the meaning of planar alignment of liquid crystals.

The term tilt angle as used in the context of the present invention is the angle between the liquid crystal director and the surface of the alignment layer. The liquid crystal director shall mean the average direction of the long axes of the liquid crystal molecules. In the context of the present invention, planar alignment shall mean that the tilt angle is less than 30°, preferably 0 to 30°.

In preferred embodiments the tilt angle, which the photo-alignment layer induces in liquid crystal materials is less than 10°, preferably 0 to 10°. In more preferred embodiments the tilt angle is less than 5°, preferably 0 to 5°, and in most preferred embodiments the tilt angle is less than 1 °, preferably 0 to 1 °.

In the context of the present invention the "substrate" as used in the context of the present invention is preferably transparent or not-transparent, preferably glass or plastic substrates, polymer films, such as polyethyleneterephthalat (PET), tri-acetyl cellulose (TAC), polypropylen, optionally coated with indium tin oxide (ITO), however not limited to them.

In the context of the present invention the wording "aligning light" has the meaning of, preferably polarized light, which is light of wavelengths, which can initiate photoalignment. Preferably, the wavelengths are in the UV-A, UVB and/or UV/C-range, or in the visible range. It depends on the photoalignment compound, which wavelengths are appropriate. Preferably, the photo-reactive groups are sensitive to visible and/or UV light. A further embodiment of the invention concerns the generating of aligning light by laser light.

In the context of the invention the irradiation of the alignment layer or the liquid crystal cell can be conducted by any wavelength or mixture of wavelength, preferably, by UV irradiation, more preferably the wavelength is different from that used as aligning light.

In the context of the present invention the term "polymer" has the meaning of polymer, homo- or copolymer, dendrimer or oligomer. Preferably, the polymer comprises a group which is the polymerized form of a "polymerizable group" as used in the context of the present invention, and refers to a functional group that can be subjected to polymerization (optionally with other comonomers) to yield an oligomer, dendrimer or polymer according to the present invention. For a person skilled in the art it will be obvious which functional groups are intended for any specific polymer. Thus for example in case of "imide monomer" as the indicated polymer backbone group it is obvious to a person skilled in the art that the actual monomer units for polymerization to yield a polyimide are e.g. diamines and dianhydrides. Similarly regarding "urethane monomer" the actual monomer units are diols and diisocyanates.

The polymerizable group is preferably selected from unsubstituted or substituted acrylate, methacrylate, 2-chloroacrylate, 2-phenylacrylate, optionally *N*-lower alkyl substituted acrylamide, methacrylamide, 2-chloroacrylamide, 2-phenylacrylamide, vinyl, allyl, vinyl ether and ester, allyl ether and ester, carbonic acid ester, acetal, urea, maleinimide, norbornene, norbornene derivaties, epoxy, styrene and styrene derivatives, for example alpha-methylstyrene, p-methylstyrene, p-tert-butyl styrene, p-chlorostyrene, siloxane, silane, diamine, imide monomers, amic acid monomers and their esters, amidimide monomers, maleic acid and maleic acid derivatives, for example, di-n-butyl maleate, dimethyl maleate, diethyl maleate, etc, fumaric acid and fumaric acid derivatives, for example, di-n-butyl fumarate, di-(2-ethylhexyl) fumarate, etc, urethanes or their corresponding homo- and co-polymers.

More preferably the polymerizable group is selected from acrylate, methacrylate, vinyl ether and ester, epoxy, styrene derivatives, siloxane, silane, maleinimide, aromatic diamine with dianhydride, norbornene, norbornene derivaties, imide monomers, amic acid monomers, amic acid ester monomers and their corresponding homo- and copolymers, or an unsubstituted or substituted, aliphatic, aromatic and/or alicyclic diamine group.

More preferably polymerizable group represents an unsubstituted or substituted, aliphatic, aromatic and/or alicyclic diamine group, siloxane, maleinimide, especially diamine group having from 1 to 40 carbon atoms; wherein the diamine group comprises an aliphatic group, which may comprise one or more heteroatom and/or bridging group;
and/or an aromatic group; and/or an alicyclic group. Especially most preferred the polymerizable group is selected from diamine, norbornene, norbornene derivaties, imide monomers, amic acid monomers, amic acid ester monomers and their corresponding homo- and copolymers, preferably from aromatic diamines with dianhydrides, or imide monomers, amic acid monomers, amic acid ester monomers.

In the context of the present invention the wording "aromatic group" or "alicyclic group" is a unsubstituted or substituted carbocyclic or heterocyclic, incorporating preferably five, six, ten ot 14 ring atoms, e.g. furan, benzyl or phenyl, pyridinyl, pyridinium cation, pyrimidinyl, pyrimidinium cation, naphthyl, which may form ring assemblies, such as biphenylyl or triphenyl, which are uninterrupted or interrupted by at least a single heteroatom and/or at least a single bridging group; or fused polycyclic systems, such as phenanthryl, tetralinyl. Preferably aromatic group are benzyl, phenyl, biphenyl or triphenyl. More preferred aromatic groups are benzyl, phenyl and biphenyl; further - unsubstituted or substituted alicyclic group is preferably a non-aromatic carbocyclic or heterocyclic group, wherein heterocyclic group denotes a carbocyclic group, wherein at least one -C-, -CH-, or -CH₂- group is unreplaced or replaced by a heteroatom such as -O-, -S-, or by a primary, secondary, tertiary or quaternary nitrogen, which is the ammonimum cation; and preferably the alicyclic group is a ring system, with 3 to 30 carbon atoms, and preferably cyclopropyl, cyclobutyl, cyclopentyl, cyclopentyl, cyclohexyl, cyclohexyl, cyclohexadienyl, decalinyl, aziridinyl, oxiranyl, azrinyl, aziridium cation, oxirenyl, thiirenyl, diazirine diaziridium cation, oxaziridinyl, oxaziridium cation, dioxiranyl, azetidinyl, azetinium cation azete, azetidin cation, oxetanyl, oxetyl, thietanyl, thietyl, diazetidinyl, diazetidinium cation, dioxetanyl, dioxetyl, dithietanyl, dithietyl, oxolanyl, thiolanyl, pyrrolidinyl, pyrrolidinium cationpyrrole, thiophe, pyrrolyl, furanyl, dioxanyl, dioxolanyl, dithiolanyl, maleinimidyl, maleinamidyl, oxazolinyl, oxazolidinyl, oxazolidnium cation, oxazolyl, isooxazolyl, imidazolyl, imidazolium cation, imidazolidinyl, imidazolidinium cation, pyrazolidinyl, pyrazolidinium cation, pyrazolyl, pyrazolium cation, pyrazolinyl, thiazolidinyl, thiazolidinium cation, thiazolyl, thiazolium cation, thiazolinyl, isothiazolyl, furazanyl, oxadiazolyl, dithiazolyl, tetrazolyl, piperidinyl, a piperidium cation, a piperazium oxane, pyranyl, thianyl, thiopyranyl, piperazinyl, diazinyl, morpholinyl, oxazinyl, thiomorpholinyl, thiazinyl, dioxinyl, dioxanyl, dithianyl, dithiinyl, triazinyl, tetrazinyl, azepanyl, azepinyl, such as oxepanyl, oxepinyl, thiepanyl, thiepinyl, homopiperazinyl, diazepinyl, thiazepinyl, azocanyl, azocinyl, oxecanyl, quinolinyl, quinolinium cation, benzothiphenyl, indolyl, benzofuranyl, acridinyl, dibenzothiophenyl, carbazolyl, dibenzofuranyl; ammonium cation, selected from an imidazolium cation, a pyrazolium cation.

In the context of the present invention the wording "an aligning polymer" has the meaning of a polymer which can be used for the alignment of liquid crystals, and which preferably has at least a single side-chains comprising at least a single photo-reactive group, and which is preferably not a liquid crystal. Preferably, the photo-reactive group of the side chains reacts by exposure to aligning light.

In the context of the present invention the term "photoreactive group" has the meaning of groups, which are able to react by interaction with light, preferably aligning light, and is preferably represented by a coumarin group, a cinnamate group; an unsubstituted or substituted aromatic group, which is substituted by an unsubstituted or substituted ethylene group, preferably substituted or unsubstituted phenylene; chalcon group, substituted or unsubstituted stilbene group or an azobenzene group, preferably by a cinnamate group, or, an unsubstituted or substituted aromatic group, which is substituted by an unsubstituted or substituted ethylene group, or an substituted or unsubstituted stilbene group, preferably with a cyano group substituted stilbene group.

In the context of the present invention the wording "polymerizable monomer" has the meaning of a polymerizable monomer, preferably a mono- or/and multi-polymerizable monomer, which is preferably a polymerizable liquid crystal, LCP, such as for example those described in US2012/0114907A1 and which is herewith incorporated by reference.

The polymerizable monomer is bifunctional or multifunctional and/or has a rigid core (e.g. benzene). Further preferred is a polymerizable monomer which has one or more ring or condensed ring structures and functional groups bonded directly to the ring or condensed ring structure.

More preferred is a polymerizable monomer of formula (IXXX)

((P₁)ₙ₁-S₁)_{z1}-A₁-(Z₁-A₂)ₙ-(Z₂-A₃)ₙ-(S₂-(P₂)ₙ₂)_{z2} (IXXX)

wherein
P₁ and P₂ are functional groups and are independently selected from hydrogen, acrylate, methacrylate, halogenacrylate, such as fluoroacrylate, chloroacrylate; oxetanyl, maleinimidyl, allyl, allyloxy, vinyl, vinyloxy and epoxy groups; preferably acrylate, methacrylate, halogenacrylate, such as fluoroacrylate, chloroacrylate; oxetanyl, maleinimidyl, allyl, allyloxy, vinyl, vinyloxy and epoxy groups,
S₁ and S₂ are independently from each other a single bond or spacer units,
A₁, A₂ and A₃ are ring structures and independently selected from unsubstituted or substituted carbocyclic or heterocyclic aromatic or alicyclic group with the meaning and preferences given in the present invention, especially preferred are 1,4-phenylene, naphthalene- 2,6-diyl, terphenyl, quarterphenyl, phenanthrene groups;
in a preferred embodiment the ring A₂ is substituted by methyl, ethyl, propyl, butyl, pentyl, hexyl, -O-methyl, -O-ethyl, -O-propyl, -O butyl, -O-pentyl, -O-hexyl, -OCO-methyl, -OCO-ethyl, -OCO-propyl, -OCO-butyl, -OCO-pentyl, -OCO-hexyl, -COO-methyl, -COO-ethyl, -COO-propyl, -COO-butyl, -COO-pentyl, -COO-hexyl, which may be substituted by at least one fluorine, such as especially or trifluormethyl, trifluorethyl, trifluorpropyl, trifluorbutyl, trifluorpentyl, trifluorhexyl, -O-(trifluor)methyl, -O-((tri-, four-, or five)-fluor)ethyl, -O-((tri-, four-, five-, six- or seven)-fluor)propyl, -O-((tri-, four-, five-, six- or seven)-butyl, -O-((tri-, four-, five-, six- or seven)-pentyl, -O-((tri-, four-, five-, six- or seven)-hexyl, -OCO-(trifluor)methyl, -OCO-((tri-, four-, or five)-ethyl, -OCO-((tri-, four-, or five)-propyl, -OCO-((tri-, four-, five-, six- or seven)-butyl, -OCO-((tri-, four-, five-, six- or seven)-pentyl, -OCO-((tri-, four-, five-, six- or seven)-hexyl, -COO-(trifluor)methyl, -COO-(trifluor)ethyl, -COO-((tri-, four-, five-, six- or seven)-propyl, -COO-((tri-, four-, five-, six- or seven)-butyl, -COO-((tri-, four-, five- , six- or seven)-pentyl, -COO-((tri-, four-, five-, six- or seven)-hexyl;
more preferred the ring A₂ is substituted by at least one fluorine, such as especially or trifluormethyl, trifluorethyl, trifluorpropyl, trifluorbutyl, trifluorpentyl, trifluorhexyl, -O-(trifluor)methyl, -O-((tri-, four-, or five)-fluor)ethyl, -O-((tri-, four-, five-, six- or seven)-fluor)propyl, -O-((tri-, four-, five-, six- or seven)-butyl, -O-((tri-, four-, five-, six- or seven)-pentyl, -O-((tri-, four-, five-, six- or seven)-hexyl, -OCO-(trifluor)methyl,-OCO-((tri-, four-, or five)-ethyl, -OCO-((tri-, four-, or five)-propyl, -OCO-((tri-, four-, five-, six- or seven)-butyl, -OCO-((tri-, four-, five-, six- or seven)-pentyl, -OCO-((tri-, four-, five-, six- or seven)-hexyl, -COO-(trifluor)methyl, -COO-(trifluor)ethyl, -COO-((tri-, four-, five-, six- or seven)-propyl, -COO-((tri-, four-, five-, six- or seven)-butyl,-COO-((tri-, four-, five-, six- or seven)-pentyl, -COO-((tri-, four-, five-, six- or seven)-hexyl;
Z₁ and Z₂ are independently from each other be selected from -O-, -CO-, -CH(OH)-, -CH₂(CO)-, -OCH₂-, -CH₂O-, -O-CH₂-O-, -COO-, -OCO-, -(CO)-(CO)-, -OCF₂-, -CF₂O-, -CF₂-, -CON(C₁-C₁₆alkyl)-, -(C₁-C₁₆alkyl)NCO-, -CONH-, -NHCO-, -HNOCO-, -OCONH-, -NHCONH-, -OCOO-, -CO-S-, -S-CO- ,- CSS, -SOO-, -OSO-,-SOS-, -SO-, -CH₂(SO)-, -SO₂-, -CH=CH-, -C≡C-, -CH=CH-COO-, -OCO-CH=CH-, -CH=N-, -C(CH₃)=N-, -N=N-, or a single bond; or a cyclic, straight-chain or branched, substituted or unsubstituted C₁-C₂₄alkylen, wherein one or more C-atom, CH- or CH₂-group may independently from each other be replaced by a linking group;
preferably, Z₁ and Z₂ are independently from each other -O-, -CO-, -COO-, -OCO-, -OCOO-, -OCF₂-, -CF₂O-, -CON(CH₃)-, -(CH₃)NCO-, -CONH-, -NHCO-, -CO-S-,-S-CO-, - CSS, -SOO-, -OSO-, -CSS-, -SOO-, -OSO-, -CH₂(SO₂)-, -CH₂-CH₂-, -OCH₂-, -CH₂O-, -CH=CH-, -C≡C-, -CH=CH-COO-, -OCO-CH=CH-, or a single bond;
more preferably Z₁ and Z₂ are independently from each other -COO-, -OCO-, -OCOO-, -OCF₂-, -CF₂O-, -CON(CH₃)-, -(CH₃)NCO-, -CONH-, -NHCO-, -CO-S-, -S-CO-,-CS-S-, -SOO-, -OSO, especially
   -COO-, -OCO-, -OCF₂-, -CF₂O-, -CON(CH₃)-, -(CH₃)NCO-, -CONH-, -NHCO- or a single bond,
most preferred Z₁ and Z₂ are independently from each other is a single bond, -COO- or -OCO-; and
n1 and n2 are independently from each other an integer of 1, 2, or 3;
z and z₁ are independently from each other an integer from 1, 2 or 3.

Especially more preferred is a polymerizable monomer of formula (IXXX)

((P₁)ₙ₁-S₁)_{z1}-A₁-(Z₁-A₂)ₙ-(Z₂-A₃)ₙ-(S₂-(P₂)ₙ₂)_{z2} (IXXX)

wherein
P₁ and P₂ are functional groups and are independently selected from hydrogen, acrylate, methacrylate, halogenacrylate, such as fluoroacrylate, chloroacrylate; oxetanyl, maleinimidyl, allyl, allyloxy, vinyl, vinyloxy and epoxy groups; preferably acrylate, methacrylate, halogenacrylate, such as fluoroacrylate, chloroacrylate; oxetanyl, maleinimidyl, allyl, allyloxy, vinyl, vinyloxy and epoxy groups
S₁ and S₂ are independently from each other a single bond or spacer units,
A₁, and A₃ are ring structures and independently selected from unsubstituted or substituted carbocyclic or heterocyclic aromatic or alicyclic group with the meaning and preferences given in the present invention, especially preferred are 1,4-phenylene naphthalene- 2,6-diyl, terphenyl, quarterphenyl, phenanthrene groups;
A₂ is ring structures and independently selected from unsubstituted or substituted carbocyclic or heterocyclic aromatic or alicyclic group with the meaning and preferences given in the present invention, especially preferred are 1,4-phenylene naphthalene- 2,6-diyl, terphenyl, quarterphenyl, phenanthrene groups and wherin the substituents are selected from trifluormethyl, trifluorethyl, trifluorpropyl, trifluorbutyl, trifluorpentyl, trifluorhexyl, -O-(trifluor)methyl, -O-((tri-, four-, or five)-fluor)ethyl, -O-((tri-, four-, five-, six- or seven)-fluor)propyl, -O-((tri-, four-, five-, six- or seven)-butyl, -O-((tri-, four-, five-, six- or seven)-pentyl, -O-((tri-, four-, five-, six- or seven)-hexyl, -OCO-(trifluor)methyl, -OCO-((tri-, four-, or five)-ethyl, -OCO-((tri-, four-, or five)-propyl, -OCO-((tri-, four-, five-, six- or seven)-butyl, -OCO-((tri-, four-, five-, six- or seven)-pentyl, -OCO-((tri-, four-, five-, six- or seven)-hexyl, -COO-(trifluor)methyl, -COO-(trifluor)ethyl, -COO-((tri-, four-, five-, six- or seven)-propyl,-COO-((tri-, four-, five-, six- or seven)-butyl, -COO-((tri-, four-, five-, six- or seven)-pentyl, and -COO-((tri-, four-, five-, six- or seven)-hexyl;
Z₁ and Z₂ are independently from each other be selected from -O-, -CO-, -CH(OH)-, -CH₂(CO)-, -OCH₂-, -CH₂O-, -O-CH₂-O-, -COO-, -OCO-, -(CO)-(CO)-, -OCF₂-, -CF₂O-, -CF₂-, -CON(C₁-C₁₆alkyl)-, -(C₁-C₁₆alkyl)NCO-, -CONH-, -NHCO-, -HNOCO-, -OCONH-, -NHCONH-, -OCOO-, -CO-S-, -S-CO- ,- CSS, -SOO-, -OSO-,-SOS-, -SO-, -CH₂(SO)-, -SO₂-, -CH=CH-, -C≡C-, -CH=CH-COO-, -OCO-CH=CH-, -CH=N-, -C(CH₃)=N-, -N=N-, or a single bond; or a cyclic, straight-chain or branched, substituted or unsubstituted C₁-C₂₄alkylen, wherein one or more C-atom, CH- or CH₂-group may independently from each other be replaced by a linking group; and
n1 and n2 are independently from each other an integer of 1, 2, or 3,
z and z₁ are independently from each other an integer from 1, 2 or 3.

In formula (IXXX), P₁ and P₂ are preferably acrylate or methacrylate groups, S₁ and S₂ are a single bond Z₁ is preferably a single bond, and n is preferably 0 or 1.
Most preferred is a polymerizable monomer represented by any one of the formulae (XXX), (XXXa), (XXXI) or (XXXII) 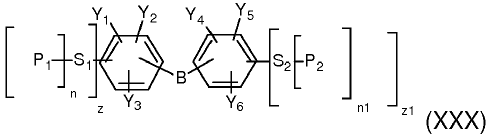 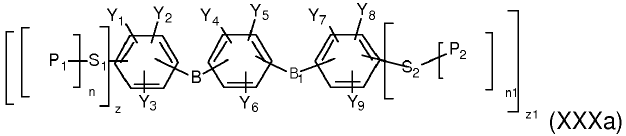 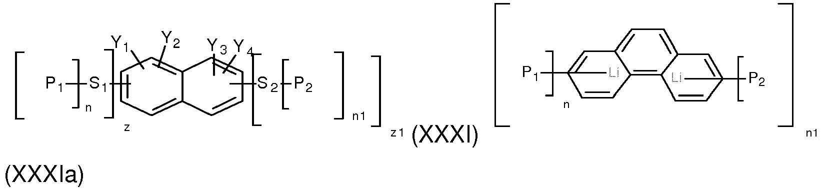 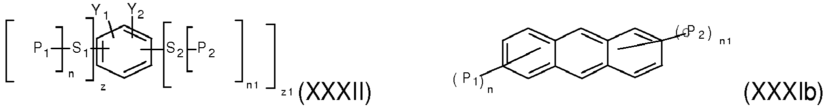
wherein P₁ and P₂ are independently from each other hydrogen, acrylate, methacrylate, oxetane, maleinimide, allyl, allyloxy, vinyl, vinylamide, vinyloxy and epoxy group, epoxy derivatives, butoxy and butoxy derivaties; preferably acrylate, methacrylate, oxetane, maleinimide, allyl, allyloxy, vinyl, vinylamide, vinyloxy and epoxy group, epoxy derivatives, butoxy and butoxy derivaties;
B and B₁ are independently from each other a single bond, -CO-C(C₁-C₆alkoxy)₂-,-COO-, -OCO-,
n and n₁ are independently from each other an integer from 1, 2 or 3,
z and z₁ are independently from each other an integer from 1, 2 or 3,
Y₁, Y₂, Y₃, Y₄, Y₅, Y₆, Y₇, Y₈, Y₉ are independently from each other hydrogen, a straight-chain or branched -Y₁₅-C₁-C₁₆alkyl group or C₁-C₁₆alkyl group, preferably a C₁-C₆alkyl group, wherein Y₁₅ is O, OCO, COO, NHCO, CONH or OCO, and wherein the alkyl group of the -Y₁₅-C₁-C₁₆alkyl group or the C₁-C₁₆alkyl group is unsubstituted or substituted by at least one fluorine, chlorine or bromine, especially fluorine; or di-(C₁-C₁₆alkyl)amino, C₁-C₁₅alkyloxy, nitro, nitrile and/or chlorine; and wherein one or more C-atom, CH- or CH₂- group may independently from each other be replaced by a linking group; halogen or nitrile; preferred substituents are C₁-C₆alkyl group, especially methyl or ethyl, C₁-C₆alkoxy group, especially methoxy or ethoxy, chlorine, fluorine, or nitrile, more preferably methoxy, chlorine, fluorine, or CN and most preferably methoxy, chlorine or fluorine; further, if the aromatic group is substituted, then it is preferably substituted once or twice;
especially preferred is Y₁, Y₂, Y₃, Y₄, Y₅, Y₆, Y₇, Y₈, Y₉ methyl, ethyl, propyl, butyl, pentyl, hexyl, -O-methyl, -O-ethyl, -O-propyl, -O butyl, -O-pentyl, -O-hexyl, -OCO-methyl, -OCO-ethyl, -OCO-propyl, -OCO-butyl, -OCO-pentyl, -OCO-hexyl, -COO-methyl, -COO-ethyl, -COO-propyl, -COO-butyl, -COO-pentyl, -COO-hexyl, which may be substituted by at least one fluorine, chlorine or bromine, especially fluorine.

More especially preferred Y₁, Y₂, Y₃, Y₄, Y₅, Y₆, Y₇, Y₈, Y₉ are trifluormethyl, trifluorethyl, trifluorpropyl, trifluorbutyl, trifluorpentyl, trifluorhexyl, -O-(trifluor)methyl,-O-((tri-, four-, or five)-fluor)ethyl, -O-((tri-, four-, five-, six- or seven)-fluor)propyl, -O-((tri-, four-, five-, six- or seven)-butyl, -O-((tri-, four-, five-, six- or seven)-pentyl, -O-((tri-, four-, five-, six- or seven)-hexyl, -OCO-(trifluor)methyl, -OCO-((tri-, four-, or five)-ethyl, -OCO-((tri-, four-, or five)-propyl, -OCO-((tri-, four-, five-, six- or seven)-butyl,-OCO-((tri-, four-, five-, six- or seven)-pentyl, -OCO-((tri-, four-, five-, six- or seven)-hexyl, -COO-(trifluor)methyl, -COO-(trifluor)ethyl, -COO-((tri-, four-, five-, six- or seven)-propyl, -COO-((tri-, four-, five-, six- or seven)-butyl, -COO-((tri-, four-, five-, six- or seven)-pentyl, -COO-((tri-, four-, five-, six- or seven)-hexyl;
S₁, S₂, are independently from each other a single bond or a spacer unit, which is preferably a straight-chain or branched, substituted or unsubstituted C₁-C₂₄alkylen, in which one or more, preferably non-adjacent, C-atom, CH- or CH₂-, group may be replaced by a linking group within the above given meaning and preferences, and, preferably replaced by is a single bond, -O-, -O(CO), -S-, -(CO)O- or 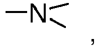 -NR²-, and wherein the substituent is preferably at least one C₁-C₆alkyl, preferably methyl;

In a further preferred embodiment the polymerizable monomer is of formulae (XXX) or (XXXa), especially, wherein Y₁, Y₂, Y₃, Y₄, Y₅, Y₆, Y₇, Y₈, Y₉ are independently from each other hydrogen, a straight-chain or branched -Y₁₅-C₁-C₁₆alkyl group, preferably wherein at least Y₆ is a straight-chain or branched -Y₁₅-C₁-C₁₆alkyl group, wherein the alkyl group of the -Y₁₅-C₁-C₁₆alkyl group is unsubstituted or substituted by at least one fluorine, chlorine or bromine, especially fluorine; or di-(C₁-C₁₆alkyl)amino, C₁-C₁₅alkyloxy, nitro, nitrile and/or chlorine; and wherein one or more C-atom, CH- or CH₂-group may independently from each other be replaced by a linking group; halogen or nitrile; preferred substituents are C₁-C₆alkyl group, especially methyl or ethyl, C₁-C₆alkoxy group, especially methoxy or ethoxy, chlorine, fluorine, or nitrile, more preferably methoxy, chlorine, fluorine, or CN and most preferably methoxy, chlorine or fluorine;
preferably Y₆ is trifluormethyl, trifluorethyl, trifluorpropyl, trifluorbutyl, trifluorpentyl, trifluorhexyl, -O-(trifluor)methyl, -O-((tri-, four-, or five)-fluor)ethyl, -O-((tri-, four-, five-, six- or seven)-fluor)propyl, -O-((tri-, four-, five-, six- or seven)-butyl, -O-((tri-, four-, five-, six- or seven)-pentyl, -O-((tri-, four-, five-, six- or seven)-hexyl, -OCO-(trifluor)methyl, -OCO-((tri-, four-, or five)-ethyl, -OCO-((tri-, four-, or five)-propyl, -OCO-((tri-, four-, five-, six- or seven)-butyl, -OCO-((tri-, four-, five-, six- or seven)-pentyl, -OCO-((tri-, four-, five-, six- or seven)-hexyl, -COO-(trifluor)methyl, -COO-(trifluor)ethyl, -COO-((tri-, four-, five-, six- or seven)-propyl, -COO-((tri-, four-, five-, six- or seven)-butyl, -COO-((tri-, four-, five-, six- or seven)-pentyl, -COO-((tri-, four-, five-, six- or seven)-hexyl.

The present invention further relates to a polymerizable monomer of formula 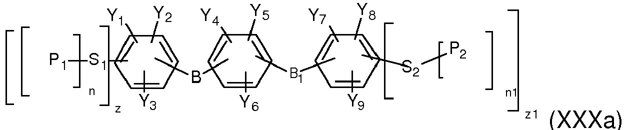 wherein
P₁, S₁, B, B₁, Y₁, Y₂, Y₃, Y₄, Y₅, Y₇, Y₈, Y₉, S₂, P₂, and n and n1 have the meaning as described above within the given preferences, and
Y₆ is trifluormethyl, trifluorethyl, trifluorpropyl, trifluorbutyl, trifluorpentyl, trifluorhexyl,-O-(trifluor)methyl, -O-((tri-, four-, or five)-fluor)ethyl, -O-((tri-, four-, five-, six- or seven fluor))-fluor)propyl, -O-((tri-, four-, five-, six- or seven fluor)-butyl, -O-((tri-, four-, five-, six- or seven fluor)-pentyl, -O-((tri-, four-, five-, six- or seven)-hexyl, -OCO-(trifluor)methyl, -OCO-((tri-, four-, or five fluor)-ethyl, -OCO-((tri-, four-, or five fluor)-propyl, -OCO-((tri-, four-, five-, six- or seven fluor)-butyl, -OCO-((tri-, four-, five-, six- or seven fluor)-pentyl, -OCO-((tri-, four-, five-, six- or seven fluor)-)-hexyl, -COO-(trifluor)methyl, -COO-(trifluor)ethyl, -COO-((tri-, four-, five-, six- or seven fluor)-)-propyl, -COO-((four-, five-, six- or seven fluor)-butyl, -COO-((tri-, four-, five-, six- or seven fluor)-)-pentyl, -COO-((tri-, four-, five-, six- or seven fluor)-)-hexyl,
if z or z1 is 1; or
wherein
Y₆ is trifluormethyl, trifluorethyl, trifluorpropyl, trifluorbutyl, trifluorpentyl, trifluorhexyl,-O-(trifluor)methyl, -O-((tri-, four-, or five)-fluor)ethyl, -O-((tri-, four-, five-, six- or seven fluor))-fluor)propyl, -O-((tri-, four-, five-, six- or seven fluor)-butyl, -O-((tri-, four-, five-, six- or seven fluor)-pentyl, -O-((tri-, four-, five-, six- or seven)-hexyl, -OCO-(trifluor)methyl, -OCO-((tri-, four-, or five fluor)-ethyl, -OCO-((tri-, four-, or five fluor)-propyl, -OCO-((tri-, four-, five-, six- or seven fluor)-butyl, -OCO-((tri-, four-, five-, six- or seven fluor)-pentyl, -OCO-((tri-, four-, five-, six- or seven fluor)-)-hexyl, -COO-(trifluor)methyl, -COO-(trifluor)ethyl, -COO-((tri-, four-, five-, six- or seven fluor)-)-propyl, -COO-((tri-, four-, five-, six- or seven fluor)-butyl, -COO-((tri-, four-, five-, six- or seven fluor)-)-pentyl, -COO-((tri-, four-, five-, six- or seven fluor)-)-hexyl,
if z or z1 is 2 or 3.

In formulae (XXX), (XXXa), and (XXXII) a substituent group for the benzene ring is present at the o-position, m-position, or p-position. In formula (XXXI), a substituent group for the naphthalene ring is present at the o-position, m-position, p-position, ana-position, E (epi)-position, kata-position, pen-position, pros-position, amphi-position, or 2,7-position. The substituent group for the benzene ring is preferablypresent at the p-position among the above positions. The substituent group for the naphthalene ring is preferably present at the amphi-position among the above positions.

The term "linking group", as used in the context of the present invention is preferably be selected from a single bond, -S-, -S(CS)-, -(CS)S-, -CO-S-, -S-CO-, -O-, -CO, -CO-O-, -O-CO-, 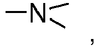 -NR^{2'}-, -NR^{2'}-CO-, -CO-NR^{2'}-, -NR^{2'}-CO-O-, -O-CO-NR^{2'}-,-NR^{2'}-CO-NR^{2'}-, -CH=CH-, -C≡C-, -O-CO-O-, -Si(CH₃)₂-O-Si(CH₃)₂-, a cyclic, straight-chain or branched, substituted or unsubstituted C₁-C₂₄alkylen, wherein one or more C-atom, CH- or CH₂-group may independently from each other be replaced by -O-; and unsubstituted or substituted cyclohexylen and unsubstituted or substituted phenylene and wherein:
R^{2'} represents a hydrogen atom or C₁-C₆alkyl; especially hydrogen or methyl;
with the proviso that oxygen atoms of linking groups are not directly linked to each other; preferred is a single bond, -O-, -O(CO), -S-, -(CO)O- or 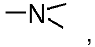 -NR^{2'}-.

Preferably, the present invention relates to a method for the preparation of an alignment layer for the planar alignment of liquid crystals in a liquid crystal display, LCD, comprising
- forming a layer on a substrate by bringing into contact a composition comprising an aligning polymer and a polymerizable monomer with said substrate,
   wherein the polymer, which can be used for the alignment of liquid crystals preferably has at least a single side-chains comprising at least a single photo-reactive group, which is preferably a coumarin group, a cinnamate group; an unsubstituted or substituted aromatic group, which is substituted by an unsubstituted or substituted ethylene group, preferably substituted or unsubstituted phenylene; a chalcon group, stilbene group or an azobenzene group; and more preferably, which is a cinnamate group, or, an unsubstituted or substituted aromatic group, which is substituted by an unsubstituted or substituted ethylene group;
   and
   a polymerizable monomer, which is preferably of formula (IXXX)
   ((P₁)ₙ₁-S₁)_{z1}-A₁-(Z₁-A₂)ₙ-(Z₂-A₃)ₙ-(S₂-(P₂)ₙ₂)_{z2} (IXXX) within the above given description and preferences, and which polymerizable monomer is more preferably of formulae (XXX) or (XXXa), especially, wherein Y₁, Y₂, Y₃, Y₄, Y₅, Y₆, Y₇, Y₈, Y₉ are independently from each other hydrogen, a straight-chain or branched -Y₁₅-C₁-C₁₆alkyl group, preferably wherein at least Y₆ is a straight-chain or branched -Y₁₅-C₁-C₁₆alkyl group, wherein the alkyl group of the -Y₁₅-C₁-C₁₆alkyl group is unsubstituted or substituted by at least one fluorine, chlorine or bromine, especially fluorine; or di-(C₁-C₁₆alkyl)amino, C₁-C₁₅alkyloxy, nitro, nitrile and/or chlorine; and wherein one or more C-atom, CH- or CH₂- group may independently from each other be replaced by a linking group; halogen or nitrile; preferred substituents are C₁-C₆alkyl group, especially methyl or ethyl, C₁-C₆alkoxy group, especially methoxy or ethoxy, chlorine, fluorine, or nitrile, more preferably methoxy, chlorine, fluorine, or CN and most preferably methoxy, chlorine or fluorine;
   preferably Y₆ is trifluormethyl, trifluorethyl, trifluorpropyl, trifluorbutyl, trifluorpentyl, trifluorhexyl, -O-(trifluor)methyl, -O-((tri-, four-, or five)-fluor)ethyl, -O-((tri-, four-, five-, six- or seven)-fluor)propyl, -O-((tri-, four-, five-, six- or seven)-butyl, -O-((tri-, four-, five-, six- or seven)-pentyl, -O-((tri-, four-, five-, six- or seven)-hexyl, -OCO-(trifluor)methyl, -OCO-((tri-, four-, or five)-ethyl, -OCO-((tri-, four-, or five)-propyl,-OCO-((tri-, four-, five-, six- or seven)-butyl, -OCO-((tri-, four-, five-, six- or seven)-pentyl, -OCO-((tri-, four-, five-, six- or seven)-hexyl, -COO-(trifluor)methyl, -COO-(trifluor)ethyl, -COO-((tri-, four-, five-, six- or seven)-propyl, -COO-((tri-, four-, five-, six- or seven)-butyl, -COO-((tri-, four-, five-, six- or seven)-pentyl, -COO-((tri-, four-, five-, six- or seven)-hexyl;
   and
- irradiating said layer with aligning light, whereby an alignment layer is formed, preferably irradiating while no voltage is applied,
- bringing into contact said alignment layer with a liquid crystal composition;
- preferably, wherein the liquid crystal composition does not comprise a polymerizable monomer, or a polymer or oligomer, which is the polymerized form of said polymerizable monomer,
- assembling a liquid crystal cell, preferably by using at least one of said alignment layer and a liquid crystal composition,
- irradiating said liquid crystal cell; preferably irradiating while no voltage is applied.

In addition, the present invention relates to a composition comprising an aligning polymer and a polymerizable monomer according to the present invention within the given description and preferences.

Optionally the composition comprises an aligning polymer and a polymerizable monomer according to the present invention within the given description and preferences and a photoinitiator, and optionally a photosensitizer and optionally further additives.

The weight% ratio of aligning polymer to the polymerizable monomer is from 99.99:0.01 to 80:20, preferably 99.99:0.01 to 90:10, more preferably 99.99:0.01 to 93:7, most preferably 99.9: 0.1 to 95:5.

Further, the present invention relates to an alignment layer, especially for the planar alignment of liquid crystals, comprising at least one aligning polymer and a polymerizable monomer, preferably in a single alignment layer, or a composition as described in the present invention within the given preferences.

More preferred the alignment layer comprises a pre-alignment layer comprising the aligning polymer and an effective alignment layer comprising a polymerized polymerizable monomer within the given description and preferences of the present invention , which is preferably of formula (IXXX)

((P₁)ₙ₁-S₁)_{z1}-A₁-(Z₁-A₂)ₙ-(Z₂-A₃)ₙ-(S₂-(P₂)ₙ₂)_{z2} (IXXX)

within the above given description and preferences, and which polymerizable monomer is more preferably of formulae (XXX) or (XXXa), especially, wherein Y₁, Y₂, Y₃, Y₄, Y₅, Y₆, Y₇, Y₈, Y₉ are independently from each other hydrogen, a straight-chain or branched -Y₁₅-C₁-C₁₆alkyl group, preferably wherein at least Y₆ is a straight-chain or branched -Y₁₅-C₁-C₁₆alkyl group, wherein the alkyl group of the -Y₁₅-C₁-C₁₆alkyl group is unsubstituted or substituted by at least one fluorine, chlorine or bromine, especially fluorine; or di-(C₁-C₁₆alkyl)amino, C₁-C₁₅alkyloxy, nitro, nitrile and/or chlorine; and wherein one or more C-atom, CH- or CH₂- group may independently from each other be replaced by a linking group; halogen or nitrile; preferred substituents are C₁-C₆alkyl group, especially methyl or ethyl, C₁-C₆alkoxy group, especially methoxy or ethoxy, chlorine, fluorine, or nitrile, more preferably methoxy, chlorine, fluorine, or CN and most preferably methoxy, chlorine or fluorine;
preferably Y₆ is trifluormethyl, trifluorethyl, trifluorpropyl, trifluorbutyl, trifluorpentyl, trifluorhexyl, -O-(trifluor)methyl, -O-((tri-, four-, or five)-fluor)ethyl, -O-((tri-, four-, five-, six- or seven)-fluor)propyl, -O-((tri-, four-, five-, six- or seven)-butyl, -O-((tri-, four-, five-, six- or seven)-pentyl, -O-((tri-, four-, five-, six- or seven)-hexyl, -OCO-(trifluor)methyl, -OCO-((tri-, four-, or five)-ethyl, -OCO-((tri-, four-, or five)-propyl, -OCO-((tri-, four-, five-, six- or seven)-butyl, -OCO-((tri-, four-, five-, six- or seven)-pentyl, -OCO-((tri-, four-, five-, six- or seven)-hexyl, -COO-(trifluor)methyl, -COO-(trifluor)ethyl, -COO-((tri-, four-, five-, six- or seven)-propyl, -COO-((tri-, four-, five-, six- or seven)-butyl, -COO-((tri-, four-, five-, six- or seven)-pentyl, -COO-((tri-, four-, five-, six- or seven)-hexyl.

Further, the present invention relates preferably to the use of an alignment layer according to the invention for the induction of planar alignment of an adjacent liquid crystalline layer, in particular for operating a cell wherein planar orientation is provided, such in IPS, such as IPS modes like S-IPS (Super IPS), AS-IPS (Advanced super IPS), E-IPS (Enhanced IPS), H-IPS (Horizontal IPS), UH-IPS, S-IPS II, e-IPS, p-IPS (performance IPS), PLS technology (plane to line switching), PS-IPS (polymer stabilized IPS), Field induced photoreactive alignment IPS FFS (fringe field switching), TN (twisted nematic), STN (supertwisted nematic).

One of the preferred embodiments of the present invention is the use of the alignment layer for the planar alignment, of
a) a liquid crystal composition, which does not comprise a polymerizable monomer according to the present invention, or a polymer or oligomer, which is the polymerized form of said polymerizable monomer, or
b) of a liquid crystal composition comprising a polymerizable monomer, preferably a mono- or/and multi-polymerizable monomer, or a polymer or oligomer, which is the polymerized form of said polymerizable monomer, or/and
c) of a liquid crystal composition, which is sandwiched between a pair of polymer films comprising at least one polymerized polymerizable monomer with the description and preferences.

In general the liquid crystals compositions or liquid crystal layers are not particularly limited, provided that they contain the mono- or/and multi-polymerizable monomer described above. The liquid crystals compositions or liquid crystal layers can thus be made of any of various liquid crystal materials that have been known publicly. The liquid crystals compositions or liquid crystal layers may be made of a liquid crystal material identical to or different from that for display use.

The polymerized form of the polymerizable monomer, is in general not limited to any molecular weight. Preferably the molecular weight is in the range of 200 to 1000000 Dalton.

Further the present invention relates to the use of the alignment layer for the preparation of an optical, electrooptical or optoelectronic device.

In the context of the present invention optoelectronic elements, are those which source, detect or control light.

The present invention further relates to an optical, electrooptical or optoelectronic device, preferably the electrooptical device is a LCD.

The present invention further relates preferably to optical, optoelectronic or electro-optical, which is an unstructured or structured constructional elements, preferably devices, more preferably liquid crystal display cells, multi-layer and hybrid layer elements, comprising at least one alignment layer according to the present invention.

Further, the present invention relates more preferably to a LCD which is sequentially built up with a first substrate, a first pre-alignment layer, a first effective alignment layer, a liquid crystal composition, a second effective alignment layer, a second pre-alignment layer and a second substrate; or
a first substrate, a first pre-alignment layer, a first effective alignment layer, a liquid crystal composition and an alignment layer, which is different from the pre-alignment layer and/or effective alignment layer, and is preferably for example a photoalignment layer or a rubbed alignment layer, photo-decomposition layer.

In the present invention the wording optical or electro-optical elements has preferably the meaning of multilayer systems, or devices for the preparation of a display waveguide, a security or brand protection element, a bar code, an optical grating, a filter, a retarder, a compensation film, a reflectively polarizing film, an absorptive polarizing film, an anisotropically scattering film compensator and retardation film, a twisted retarder film, a cholesteric liquid crystal film, a guest-host liquid crystal film, a monomer corrugated film, a smectic liquid crystal film, a polarizer, a piezoelectric cell, a thin film exhibiting non linear optical properties, a decorative optical element, a brightness enhancement film, a component for wavelength-band-selective compensation, a component for multi-domain compensation, a component of multiview liquid crystal displays, an achromatic retarder, a polarization state correction / adjustment film, a component of optical or electro-optical sensors, a component of brightness enhancement film, a component for light-based telecommunication devices, a G/H-polarizer with an anisotropic absorber, a reflective circular polarizer, a reflective linear polarizer, a MC (monomer corrugated film), twisted nematic (TN) liquid crystal displays, hybrid aligned nematic (HAN) liquid crystal displays, electrically controlled birefringence (ECB) liquid crystal displays, supertwisted nematic (STN) liquid crystal displays, optically compensated birefringence (OCB) liquid crystal displays, pi-cell liquid crystal displays, PLS technology (plane to line switching), PS-IPS (polymer stabilized IPS), in-plane switching (IPS) liquid crystal displays,
such as IPS modes: like S-IPS (Super IPS), AS-IPS (Advanced super IPS), E-IPS (Enhanced IPS), H-IPS (Horizontal IPS), UH-IPS, S-IPS II, e-IPS, p-IPS (performance IPS); CH-IPS mode (Chrial hybrid in plane switching); Field induced photoreactive alignment IPS, fringe field switching (FFS) liquid crystal displays; (FPA) field-induced photo-reactive alignment; hybrid FPA; VA-IPS mode liquid crystal displays, or displays using blue phase liquid crystals; all above display types are applied in either transmissive or reflective or transflective mode.
More preferred optical or electro-optical elements are PLS technology (plane to line switching), PS-IPS (polymer stabilized IPS), in-plane switching (IPS) liquid crystal displays, such as IPS modes like S-IPS (Super IPS), AS-IPS (Advanced super IPS), E-IPS (Enhanced IPS), H-IPS (Horizontal IPS), UH-IPS, S-IPS II, e-IPS, p-IPS (performance IPS); Field induced photoreactive alignment IPS, fringe field switching (FFS) liquid crystal displays; (FPA) field-induced photo-reactive alignment; hybrid FPA; VA-IPS mode liquid crystal displays, or displays using blue phase liquid crystals; all above display types are applied in either transmissive or reflective or transflective mode.

In the present invention, it was surprisingly found that devices, which have an alignment layer according to the present invention have good optical, electrooptical properties or optoelctronic properties. Especially, liquid crystals cells are accessible, especially liquid crystal cells for the planar alignment of liquid crystals, especially in the IPS mode, which liquid crystal cells have improved electrooptical properties such as low image sticking, especially without damaging the contrast ratio.

### EXAMPLES

### Example 1: Preparation of polyamic acid PAA-1

### Preparation of 4-(3-nitrilepropoxy)benzoic acid

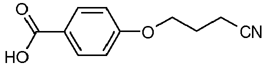

46.8 g (307 mmol) of methyl-4-hydroxybenzoate, 50 g (338 mmol) of 4-bromobutanenitrile are dissolved in 535 mL of NMP. 5.1 g (31 mmol) of potassium iodide and 128 g (93 mmol) of potassium carbonate are added and the suspension is heated up to 80°C. After 48h, a mixture of 15 g of sodium hydroxide and 49 ml of water is added. The reaction mixture is heated up to 100 °C for 5 hours. Then the solution is cooled down and 480 mL of water is added. The aqueous layer is removed and the organic layer is poured to 1.5 L of icy water. 81 mL of a 25% HCI solution is added. The precipitate is filtered off and washed with 250 mL of water. The resulting product is incorporated in 600 mL of MeOH. The suspension is then stirred for 1 hour and filtered off to give 50.1 g (80%) of 4-(3-nitrilepropoxy)benzoic acid as a white powder used without further purification.

### Preparation of (2E)-3-(4-{[4-(3-nitrilepropoxy)benzoyl]oxy}phenyl)prop-2-enoic acid

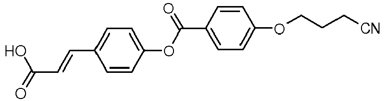

16.8 g (82 mmol) of 4-(3-nitrilepropoxy)benzoic acid is suspended in 56 mL of toluene and few drops of dimethylformamide are added. The suspension is heated up to 75°C and 10.7 g (90 mmol) of thionylchloride are added. After 2 hours, the excess of thionyl chloride is removed under pressure. The solution is cooled down to room temperature. 10.2 g (83 mmol) of 4-hydroxybenzaldehyde 0.5 g (4 mmol) of 4-diaminopyridine and 28 g (355 mmol) of pyridine are added. After 3 hours, 14.5 g (140 mmol) of malonic acid and 3 g (42 mmol) of pyrrolidine are added. The reaction mixture is allowed to react at 80°C for 30 min. 16.8 mL of MeOH are then incorporated and the suspension is cooled down and kept at 0°C for 1 hour. The product is filtered off and suspended for 2 hours in a solution of 57 mL of MeOH, 11 mL of water and 7.5 g of a 25% HCL solution. The solid is filtered off and washed with MeOH and heptane. The product is crystallized in acetonitrile to give 23 g (80%) of (2*E*)-3-(4-{[4-(3-nitrilepropoxy)benzoyl]oxy}phenyl)prop-2-enoic acid as a white powder.

### Preparation of 2-(2,4-dinitrophenyl)ethanol

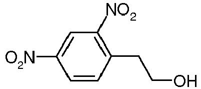

22.6 g (100 mmol) of 2,4-dinitrophenylacetic acid is dissolved in 150 mL of THF and added dropwise in 2 hours to 300 mL of a borane(BH₃)-THF complex 1.0 M solution in THF. After 3 hours at 25°C, 200 ml of water are added. The reaction mixture is then poured to ethyl acetate and water. The organic phase is washed repeatedly with water and dried over sodium sulphate, filtered and concentrated under pressure. Chromatography of the residue using toluene : ethyl acetate 1 : 1 as eluent and crystallization in ethylacetate/hexane yields 20.7 g (98%) of 2-(2,4-dinitrophenyl)ethanol as yellowish crystal.

### Preparation of 4-{(1E)-3-[2-(2,4-dinitrophenyl)ethoxy]-3-oxoprop-1-enyl}phenyl 4-(3-nitrilepropoxy)benzoate

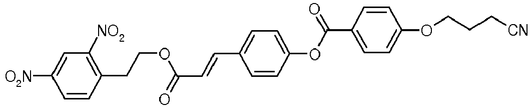

21.1 g (60 mmol) of (2*E*)-3-(4-{[4-(3-nitrilepropoxy)benzoyl]oxy}phenyl)prop-2-enoic acid, 12.7 g (60 mmol) of 2-(2,4-dinitrophenyl)ethanol, 0.366 g of 4-dimethylaminopyridine are dissolved in 120 mL of dichloromethane. 12.6 g (66 mmol) of N-(3-Dimethylaminopropyl)-N'-ethylcarbodiimide hydrochloride (EDC hydrochloride) are added at 0°C. The solution is stirred for 1 h at 0°C and allowed to stir at room temperature overnight. After 22 hours at room temperature, the reaction mixture is partitioned between dichloromethane and water. The organic phase is washed repeatedly with water, dried over sodium sulphate, filtered and concentrated by rotary evaporation. The product is dried at 40°C under vacuum to yield 29.2 g (89%) of 4-{(1*E*)-3-[2-(2,4-dinitrophenyl)ethoxy]-3-oxoprop-1-enyl}phenyl4-(3-nitrilepropoxy)benzoate as a yellowish powder.

### Preparation of 4-{(1E)-3-[2-(2,4-diaminophenyl)ethoxy]-3-oxoprop-1-enyl}phenyl 4-(3-nitrilepropoxy)benzoate

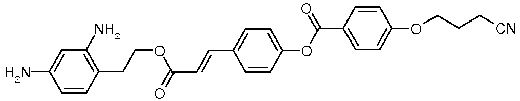

5 g (9.1 mmol) of 4-{(1*E*)-3-[2-(2,4-dinitrophenyl)ethoxy]-3-oxoprop-1-enyl}phenyl 4-(3-nitrilepropoxy)benzoate are dissolved in a mixture of 84 ml of DMF and 9 ml of water. 15.7 g (58 mmol) of ferric chloride hexahydrate are added. 6.31 g (97 mmol) of zinc powder are added portionwise within 30 min. The mixture is allowed to react for 2 hours. The reaction mixture is then partitioned between ethyl acetate and water and filtered. The organic phase is washed repeatedly with water, dried over sodium sulfate, filtered and concentrated by rotary evaporation. Filtration of the residue on silica gel using toluene : ethyl acetate 1 : 3 as eluent and yields 2.7 g (61%) of 4-{(1*E*)-3-[2-(2,4-diaminophenyl)ethoxy]-3-oxoprop-1-enyl}phenyl 4-(3-nitrilepropoxy)benzoate as a white powder.
¹H NMR (300 MHz) in DMSO-d₆: 8.10 (d, 2H), 7.83 (d, 2H), 7.69 (d, 1H), 7.33 (d, 2H), 7.15 (d, 2H), 6.65 (d, 1H), 6.61 (d, 1H), 5.91 (d, 1H), 5.81 (dd, 1H), 4.65 (s, 4H), 4.18 (m, 4H), 2.69 (t, 4H), 2.08 (qi, 2H).

### Preparation of PAA-1

0.69 g (3.1 mmol) of 2,3,5-tricarboxycyclopentylacetic-1,2:3,4-dianhydride is added to a solution of 1.5 g (3.1 mmol) of 4-{(1*E*)-3-[2-(2,4-diaminophenyl)ethoxy]-3-oxoprop-1-enyl}phenyl 4-(3-nitrilepropoxy)benzoate in 5.1 g of NMP. Stirring is then carried out at 0°C for 2 hours. The mixture is subsequently allowed to react for 48 hours at room temperature. The polymer mixture is diluted with 30 g of NMP, precipitated into 300 mL of water to yield, after drying at 40°C under vacuum, 1.9 g of polyamic acid PAA-1 in the form of a white powder.
[η] = 0.40dL/g
¹H NMR (300 MHz) in DMSO-d₆: 12.35 (s, 2H), 10.03 (m, 1H), 9.50 (m, 1H), 8.07 (m, 2H), 7.91-7.40 (br., 5H), 7.29 (m, 2H), 7.12 (m, 3H), 6.59 (m, 1H), 4.26 (m, 2H), 4.14 (m, 2H), 3.24-2.30 (m, 12H), 2.01 (m, 2H).

### Example 2: Preparation of polymerizable monomer-1

### 4,4,4-trifluorobutyl 2,5-bis[[4-(6-prop-2-enoyloxyhexoxy)benzoyl]oxy]benzoate

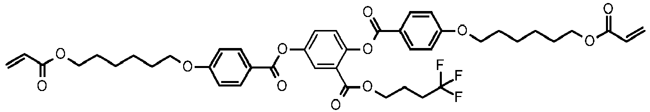

4,4,4-trifluorobutyl 2,5-bis[[4-(6-prop-2-enoyloxyhexoxy)benzoyl]oxy]benzoate is prepared according to the method described in WO2000048985.

### Example 3: Preparation of polymerizable monomer-2

### 3,3,4,4,5,5,6,6,6-nonafluorohexyl 2,5-bis[[4-(6-prop-2-enoyloxyhexoxy)benzoyl]oxy] benzoate

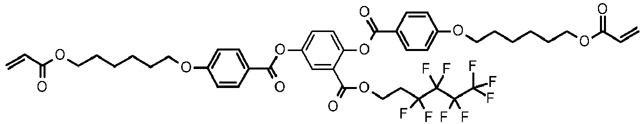

3,3,4,4,5,5,6,6,6-nonafluorohexyl 2,5-bis[[4-(6-prop-2-enoyloxyhexoxy)benzoyl]oxy] benzoate is prepared according to the method of preparation of Example 2 described in WO2000048985, starting from 4-(6-prop-2-enoyloxyhexoxy)benzoic acid. HPLC purity is 99.9 area%.
Mass spectroscopy + EMS: 966.3 (MNH₄)⁺

### Example 4: Preparation of polymerizable monomer-3

### 4,4,4-trifluorobutyl 2,5-bis[[3,4,5-tris(6-prop-2-enoyloxyhexoxy)benzoyl]oxy]benzoate

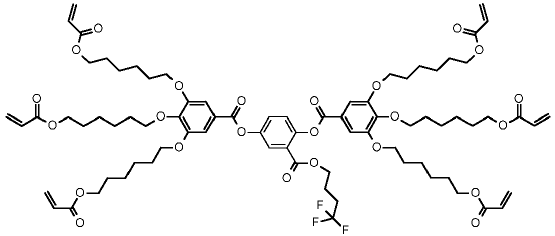

0.20 g (0.00075 mol) of 4,4,4-trifluorobutyl 2,5-dihydroxybenzoate, 1.00 g (0.00158 mol) of 3,4,5-tris(6-prop-2-enoyloxyhexoxy)benzoic acid and 0.02 g of dimethylaminopyridine are dissolved in 10 mL of toluene. The solution is cooled to 0°C and 0.37 g (0.00181 mol) of dicyclohexylcarbodiimide are added. The reaction mixture is stirred for 1 hour at 0°C, then overnight at room temperature. The next day the reaction mixture is cooled to 0°C and another 0.24 g of 3,4,5-tris(6-prop-2-enoyloxyhexoxy)benzoic acid, followed by 0.11 g of dicyclohexylcarbodiimide are added, stirring at 0°C is continued for 1 hour, then the mixture is warmed to room temperature and stirred for 4 hours. The suspension is filtered, the solid residues are washed with 50 ml of toluene and the combined filtrate and washings are concentrated on a rotary evaporator to yield 1.70 g of oily residue. The residue is further purified by column chromatography on 200 g of Silicagel with toluene : ethyl acetate 90 /: 10 as eluent. The fractions containing the product are collected and evaporated to yield 0.72 g (64.3 % of theory) of colorless, oily product which slowly crystallizes at 0°C. HPLC purity is 98.5 area%.
1H-NMR 300MHz (DMSO-d6): 7.901 (d, 1H), 7.69 (d, 1H), 7.51 (d, 1H), 7.40 (s, 2H), 7.38 (s, 2H), 6.34-5.89 (m, 18H), 4.21-3.97 (m, 26H), 2.20 (m, 2H), 1.78-1.35 (m, 50H).

Example 5: Preparation of polymerizable monomer-4

### 4-[(4-{[4-({5-[2-(acryloyloxy)ethoxy]-5-oxopentanoyl}oxy)benzoyl]oxy}-2-methylphenoxy)carbonyl]phenyl 2-(acryloyloxy)ethyl pentanedioate

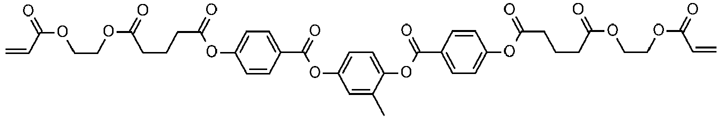

4-[(4-{[4-({5-[2-(acryloyloxy)ethoxy]-5-oxopentanoyl}oxy)benzoyl]oxy}-2-methylphenoxy)carbonyl]phenyl 2-(acryloyloxy)ethyl pentanedioate is prepared according to the method described in WO2011003846.

### Application Example A:

Liquid crystal cells are prepared wherein the alignment layer is prepared by using the polyamic acid PAA-1 solution.

### Preparation of polyamic acid PAA-1 solution:

A 4.5wt% solution of polyamic acid PAA-1 is prepared by mixing the solid polyamic acid PAA-1 in the solvent n-methyl-2-pyrrolidone and stirred thoroughly till the solid polyamic acid PAA-1 is dissolved and a second solvent butyl cellosolve is added and the whole composition is stirred thoroughly to obtain the final solution. The solvent ratio between n-methyl-2-pyrrolidone and butyl cellosolve is 1 : 1.

### Preparation of LC cells:

The above polyamic acid PAA-1 solution is spin-coated onto a pair of glass substrates at a spin speed of 1100 rpm for 30 seconds. On top of the first substrate is an ITO electrode with an interdigital pattern, with an electrode width and spacing of 10µm. The second substrate is without any ITO coating.
After spin coating, the substrates are subjected to pre-baking for 90 seconds at 80°C and post-baking for 40 minutes at 200°C. The resulting layer thickness is around 100nm. The coated polymer layer is exposed to linearly polarized UV-B light (LPUV) with the incidence angle normal to the substrate surface. The applied exposure dose is 22mJ/cm². After LPUV exposure, cells are assembled with the two substrates, the exposed polymer layers facing to the inside of the cell. The substrates are adjusted relative to each other such that the induced alignment directions are parallel to each other. The cells are then capillary filled with liquid crystal, licristal®,MLC-3019 (Merck Ltd.), which exhibits a positive dielectric anisotropy. The cell is then subjected to a thermal annealing at 130°C for 30 minutes to complete the cell process.

The liquid crystal in the cells shows well defined planar orientation. A tilt angle of 0.012° is measured using the rotating analyzer method with Optipro equipment (Shintech).

### Evaluation of image sticking:

The voltages V_{T1%} and V_{T100%} at which the cell exhibits respectively light transmission of 1% and 100% are determined. The cell is then subjected to an electrical stress test with an AC (alternating current) voltage of V_{T100%} =5.5V applied to the cell for 20 hours. In order to evaluate image sticking, the transmission at V_{T1%} is measured directly after removing the stress and gives a value of 1.29%, which means that the transmission is 29% higher than the initial value.

The contrast ratio (Transmission with parallel polarizer / Transmission with perpendicular polarizer) is 1500-1600.

### Application Example B:

Liquid crystal cells are prepared wherein the alignment layer is prepared by using the formulation-1.

### Preparation of formulation-1:

A 4.5wt% solution of formulation-1 is prepared by mixing the solid polyamic acid PAA-1, polymerizable monomer-1 and Irgacure OXE02 (BASF) in the ratio of 97.8 : 2 : 0.2, in the solvent n-methyl-2-pyrrolidone and stirred thoroughly till the whole mixture is dissolved and a second solvent butyl cellosolve is added and the whole composition is stirred thoroughly to obtain the final solution. The solvent ratio between n-methyl-2-pyrrolidone and butyl cellosolve is 1 : 1.

### Preparation of LC cells:

The above formulation-1 is spin-coated onto a pair of glass substrates at a spin speed of 1200 rpm for 30 seconds. On top of the first substrate is an ITO electrode with an interdigital pattern, with an electrode width and spacing of 10µm. The second substrate is without any ITO coating.
After spin coating, the substrates are subjected to pre-baking for 90 seconds at 80°C and post-baking for 40 minutes at 200°C. The resulting layer thickness is around 100nm. The coated polymer layer are exposed to linearly polarized UV-B light (LPUV) with the incidence angle normal to the substrate surface. The applied exposure dose is 22mJ/cm². After LPUV exposure, cells are assembled with the two substrates, the exposed polymer layers facing to the inside of the cell. The substrates are adjusted relative to each other such that the induced alignment directions are parallel to each other. The cells are then capillary filled with liquid crystal, licristal®,MLC-3019 (Merck Ltd.), which exhibits a positive dielectric anisotropy. The cell is then subjected to a thermal annealing at 130°C for 30 minutes for liquid crystal alignment. The cells are then exposed to non-polarized UV-A light (360nm-370nm) at a dose of 1200mJ/cm² to complete the cell process.

The liquid crystal in the cells shows well defined planar orientation. A tilt angle of 0.011° is measured.

Image sticking is evaluated as in Application Example A.
The transmission at V_{T1%} measured after removing the stress is 1.09%, which means that the transmission is 9% higher than the initial value.

The contrast ratio (Transmission with parallel polarizer / Transmission with perpendicular polarizer) is 1500-1600.

### Application Example C:

Liquid crystal cells are prepared wherein the alignment layer is prepared by using the formulation-2.

### Preparation of formulation-2:

Formulation-2 is prepared by in similar manner as formulation-1 with solid polyamic acid PAA-1, polymerizable monomer-1 and Irgacure OXE02 (BASF) in the ratio of 98.8 : 1 : 0.2.

### Preparation of LC cells:

Cells are processed in similar manner as in Application Example B, except the spin speed is 1150 rpm.

The liquid crystal in the cells shows well defined planar orientation. A tilt angle of 0.012° is measured.

Image sticking is evaluated as in Application Example A.
The transmission at V_{T1%} measured after removing the stress is 1.09%, which means that the transmission is 9% higher than the initial value.

The contrast ratio (Transmission with parallel polarizer / Transmission with perpendicular polarizer) is 1500-1600.

### Application Example D:

Liquid crystal cells are prepared wherein the alignment layer is prepared by using the formulation-3.

### Preparation of formulation-3:

Formulation-3 is prepared by in similar manner as formulation-1 with solid polyamic acid PAA-1, polymerizable monomer-2 and Irgacure OXE02 (BASF) in the ratio of 98.8 : 1 : 0.2.

### Preparation of LC cells:

Cells are processed in similar manner as in Application Example B.

The liquid crystal in the cells shows well defined planar orientation. A tilt angle of 0.011° is measured.

Image sticking is evaluated as in Application Example A.
The transmission at V_{T1%} measured after removing the stress is 1.10%, which means that the transmission is 10% higher than the initial value.

The contrast ratio (Transmission with parallel polarizer / Transmission with perpendicular polarizer) is 1500-1600.

### Application Example E:

Liquid crystal cells are prepared wherein the alignment layer is prepared by using the formulation-4.

### Preparation of formulation-4:

Formulation-4 is prepared by in similar manner as formulation-1 with solid polyamic acid PAA-1, polymerizable monomer-3 and Irgacure OXE02 (BASF) in the ratio of 97.8 : 2 : 0.2.

### Preparation of LC cells:

Cells are processed in similar manner as in Application Example B.

The liquid crystal in the cells shows well defined planar orientation. A tilt angle of 0.012° is measured.

Image sticking is evaluated as in Application Example A.
The transmission at V_{T1%} measured after removing the stress is 1.10%, which means that the transmission is 10% higher than the initial value.

The contrast ratio (Transmission with parallel polarizer / Transmission with perpendicular polarizer) is 1400-1600.

### Application Example F:

Liquid crystal cells are prepared wherein the alignment layer is prepared by using the formulation-5.

### Preparation of formulation-5:

Formulation-5 is prepared by in similar manner as formulation-1 with solid polyamic acid PAA-1, polymerizable monomer-4 and Irgacure OXE02 (BASF) in the ratio of 97.3 : 2.5 : 0.2.

### Preparation of LC cells:

Cells are processed in similar manner as in Application Example B, except that the LPUV exposure dose is 100mJ/cm² is applied.

The liquid crystal in the cells shows well defined planar orientation. A tilt angle of 0.012° is measured.

Image sticking is evaluated test as in Application Example A.
The transmission at V_{T1%} measured after removing the stress is 1.11%, which means that the transmission is 11% higher than the initial value.

### Application Example G:

Liquid crystal cells are prepared wherein the alignment layer is prepared by using the formulation-1.

### Preparation of LC cells:

Cells are processed in similar manner as in Application Example B, except that the cells are exposed to non-polarized UV-A light (360nm-370nm) at a dose of 500mJ/cm² to complete the cell process.

The liquid crystal in the cells shows well defined planar orientation.

Image sticking is evaluated test as in Application Example A.
The transmission at V_{T1%} measured after removing the stress is 1.09%, which means that the transmission is 9% higher than the initial value.

## Claims

1. Method for the preparation of an alignment layer
for the planar alignment of liquid crystals in optical, optoelectronic or electro-optical devices comprising
- forming a layer on a substrate by bringing into contact a composition comprising an aligning polymer and a polymerizable monomer with said substrate,
- irradiating said layer with aligning light, whereby an alignment layer is formed,
- bringing into contact said alignment layer with a liquid crystal composition;
- optionally irradiating said alignment layer which will be in contact with a liquid crystal composition,
- assembling a liquid crystal cell, preferably by using at least one of said alignment layer and a liquid crystal composition,
- irradiating said liquid crystal cell;
wherein said aligning polymer has at least a single side-chain comprising at least a photo-reactive group selected from the group consisting of coumarin group, cinnamate group, an unsubstituted or substituted aromatic group, which is substituted by an unsubstituted or substituted ethylene group, chalcon group, substituted or unsubstituted stilbene group and azobenzene group;
and wherein said polymerizable monomer is bifunction or multifunctional and has one or more ring or condensed ring structures and functional groups bonded directly to the ring or condensed ring structure.

2. A polymerizable monomer of formula 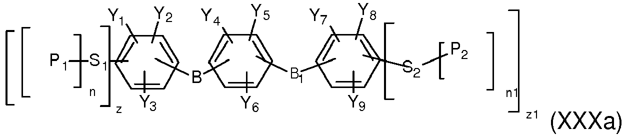
wherein P₁ and P₂ are independently from each other hydrogen, acrylate, methacrylate, oxetane, maleinimide, allyl, allyloxy, vinyl, vinylamide, vinyloxy and epoxy group, epoxy derivatives, butoxy and butoxy derivaties,
B and B₁ are independently from each other a single bond, -CO-C(C₁-C₆alkoxy)₂-,-COO-, -OCO-,
n and n₁ are independently from each other an integer from 1, 2 or 3,
Y₁, Y₂, Y₃, Y₄, Y₅, Y₇, Y₈, Y₉ are independently from each other hydrogen, a straight-chain or branched -Y₁₅-C₁-C₁₆alkyl group or C₁-C₁₆alkyl group, wherein Y₁₅ is O, OCO, COO, NHCO, CONH or OCO, and wherein the alkyl group of the -Y₁₅-C₁-C₁₆alkyl group or the C₁-C₁₆alkyl group is unsubstituted or substituted by at least one fluorine, chlorine or bromine; or di-(C₁-C₁₆alkyl)amino, C₁-C₁₅alkyloxy, nitro, nitrile and/or chlorine; and wherein one or more C-atom, CH- or CH₂- group may independently from each other be replaced by a linking group; halogen or nitrile; further, if the aromatic group is substituted, then it is substituted once or twice, and
Y₆ is trifluormethyl, trifluorethyl, trifluorpropyl, trifluorbutyl, trifluorpentyl, trifluorhexyl,-O-(trifluor)methyl, -O-((tri-, four-, or five)-fluor)ethyl, -O-((tri-, four-, five-, six- or seven fluor))-fluor)propyl, -O-((tri-, four-, five-, six- or seven fluor)-butyl, -O-((tri-, four-, five-, six- or seven fluor)-pentyl, -O-((tri-, four-, five-, six- or seven)-hexyl, -OCO-(trifluor)methyl, -OCO-((tri-, four-, or five fluor)-ethyl, -OCO-((tri-, four-, or five fluor)-propyl, -OCO-((tri-, four-, five-, six- or seven fluor)-butyl, -OCO-((tri-, four-, five-, six- or seven fluor)-pentyl, -OCO-((tri-, four-, five-, six- or seven fluor)-)-hexyl, -COO-(trifluor)methyl, -COO-(trifluor)ethyl, -COO-((tri-, four-, five-, six- or seven fluor)-)-propyl, -COO-((four-, five-, six- or seven fluor)-butyl, -COO-((tri-, four-, five-, six- or seven fluor)-)-pentyl, -COO-((tri-, four-, five-, six- or seven fluor)-)-hexyl,
if z or z1 is 1; or
wherein
Y₆ is trifluormethyl, trifluorethyl, trifluorpropyl, trifluorbutyl, trifluorpentyl, trifluorhexyl,-O-(trifluor)methyl, -O-((tri-, four-, or five)-fluor)ethyl, -O-((tri-, four-, five-, six- or seven fluor))-fluor)propyl, -O-((tri-, four-, five-, six- or seven fluor)-butyl, -O-((tri-, four-, five-, six- or seven fluor)-pentyl, -O-((tri-, four-, five-, six- or seven)-hexyl, -OCO-(trifluor)methyl, -OCO-((tri-, four-, or five fluor)-ethyl, -OCO-((tri-, four-, or five fluor)-propyl, -OCO-((tri-, four-, five-, six- or seven fluor)-butyl, -OCO-((tri-, four-, five-, six- or seven fluor)-pentyl, -OCO-((tri-, four-, five-, six- or seven fluor)-)-hexyl, -COO-(trifluor)methyl, -COO-(trifluor)ethyl, -COO-((tri-, four-, five-, six- or seven fluor)-)-propyl, -COO-((tri-, four-, five-, six- or seven fluor)-butyl, -COO-((tri-, four-, five-, six- or seven fluor)-)-pentyl, -COO-((tri-, four-, five-, six- or seven fluor)-)-hexyl,
if z or z1 is 2 or 3; and
wherein S₁ and S₂ are independently from each other a single bond or spacer units, which are a straight-chain or branched, substituted or unsubstituted C₁-C₂₄ alkylene, in which one or more non-adjacent C-atom, CH or CH₂-groups may be replaced by a single bond, -O-, -O(CO)-, -S-, -(CO)O- or 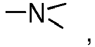 -NR²-, wherein -NR²- represent a hydrogen atom or C₁₋C₆ alkyl and wherein the substituent is C₁₋C₆ alkyl.

3. Composition for use in the method according to claim 1, comprising an aligning polymer and a polymerizable monomer as described in claims 1 or 2.

4. Alignment layer, comprising at least one aligning polymer and a polymerizable monomer or a composition as described in claims 1, 2 or 3.

5. Use of an alignment layer according to claim 4 for the induction of planar alignment of an adjacent liquid crystalline layer.

6. Use of the alignment layer according to claim 4 for the preparation of an optical, electrooptical or optoelectronic device.

7. Optical, optoelectronic or electro-optical devices, comprising at least one alignment layer as described in claim 4.

8. Optical, optoelectronic or electro-optical device according to claim 7, wherein said device is a liquid crystal device.

9. Liquid crystal device, according to claim 8, comprising at least one alignment layer as described in claim 4.

## Patentansprüche

1. Verfahren zur Herstellung einer Ausrichtungsschicht für die planare Ausrichtung von Flüssigkristallen in optischen, optoelektronischen oder elektrooptischen Vorrichtungen umfassend:
- Bilden einer Schicht auf einem Substrat durch Inkontaktbringen einer Zusammensetzung, die ein Ausrichtungspolymer und ein polymerisierbares Monomer umfasst, mit dem Substrat,
Bestrahlen der Schicht mit Ausrichtungslicht, wodurch eine Ausrichtungsschicht gebildet wird;
- Inkontaktbringen der Ausrichtungsschicht mit einer Flüssigkristallzusammensetzung;
- optionales Bestrahlen der Ausrichtungsschicht, die mit einer Flüssigkristallzusammensetzung in Kontakt stehen wird;
- Zusammenbauen einer Flüssigkristallzelle, vorzugsweise unter Verwendung mindestens einer von der Ausrichtungsschicht und einer Flüssigkristallzusammensetzung,
- Bestrahlen der Flüssigkristallzelle;
wobei das Ausrichtungspolymer mindestens eine Seitenkette aufweist, die mindestens eine photoreaktive Gruppe enthält ausgewählt aus der Gruppe bestehend aus Cumaringruppe, Cinnamatgruppe, eine unsubstituierte oder substituierte aromatische Gruppe, die durch eine unsubstituierte oder substituierte Ethylengruppe, Chalcongruppe, substituierte oder unsubstituierte Stilbengruppe oder Azobenzolgruppe substituiert ist;
und wobei das polymerisierbare Monomer bifunktionell oder multifunktionell ist und einen oder mehrere Ringe oder kondensierte Ringstrukturen aufweist und funktionelle Gruppen, die direkt an den Ring oder an die kondensierte Ringstruktur gebunden sind.

2. Ein polymerisierbares Monomer mit der Formel 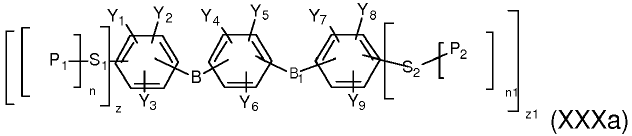
wobei P₁ and P₂ unabhängig voneinander Wasserstoff, Acrylat, Methacrylat, Oxetan, Maleinimid, Allyl, Allyloxy, Vinyl, Vinylamid, Vinyloxy und Epoxygruppe, Epoxyderivate, Butoxy und Butoxyderivate darstellen,
B und B₁ unabhängig voneinander eine Einfachbindung, -CO-C(C₁-C₆-Alkoxy)₂-, -COO-, -OCO- darstellen,
n und n₁ unabhängig voneinander eine ganze Zahl 1, 2 oder 3 darstellen,
Y₁, Y₂, Y₃, Y₄, Y₅, Y₇, Y₈, Y₉, unabhängig voneinander Wasserstoff, eine geradkettige oder verzweigte -Y₁₅-C₁-C₁₆-Alkylgrppe oder C₁-C₁₆-Alkylgruppe darstellen, wobei Y₁₅ O, OCO, COO, NHCO, CONH oder OCO ist, und wobei die Alkylgruppe der -Y₁₅-C₁-C₁₆-Alkylgruppe oder der C₁-C₁₆-Alkylgruppe unsubstituiert oder substituiert ist durch mindestens ein Fluor, Chlor oder Brom; oder Di-(C₁-C₁₆-Alkyl)amino, C₁-C₁₅-Alkyloxy, Nitro, Nitril und/oder Chlor; und wobei ein oder mehrere C-Atome, CH- oder CH₂-Gruppen unabhängig voneinander durch eine Linkergruppe ersetzt sein kann bzw. können; Halogen oder Nitril; wobei weiterhin, wenn die aromatische Gruppe substituiert ist, dann diese einfach oder zweifach substituiert ist, und
Y₆ ist Trifluormethyl, Trifluorethyl, Trifluorpropyl, Trifluorbutyl, Trifluorpentyl, Trifluorhexyl, -O-(Trifluor)methyl, -O-((Tri-, Tetra-, oder Penta)-fluor)ethyl, -O-((Tri-, Tetra-, Penta-, Hexa- oder Heptafluor))propyl, -O-((Tri-, Tetra-, Penta-, Hexa- oder Heptaflu- or)-butyl, -O-((Tri-, Tetra-, Penta-, Hexa- oder Heptafluor)-pentyl, -O-((Tri-, Tetra-, Penta-, Hexa- oder Heptafluor)-hexyl, -OCO-(Trifluor)methyl, -OCO-((Tri-, Tetra-, oder Pentafluor)-ethyl, -OCO-((Tri-, Tetra-, oder Pentafluor)-propyl, -OCO-((Tri-, Tetra-, Penta-, Hexa- oder Heptafluor)-butyl, -OCO-((Tri-, Tetra-, Penta-, Hexa- oder Heptafluor)-pentyl, -OCO-((Tri-, Tetra-, Penta-, Hexa- oder Heptafluor)-)-hexyl,-COO-(Trifluor)methyl, -COO-(Trifluor)ethyl, -COO-((Tri-, Tetra-, Penta-, Hexa- oder Heptafluor)-)-propyl, -COO-((Tetra-, Penta-, Hexa- oder Heptafluor)-butyl, -COO-((Tri-, Tetra-, Penta-, Hexa- oder Heptafluor)-)-pentyl, -COO-((Tri-, Tetra-, Penta-, Hexa- oder Heptafluor)-)-hexyl,
wenn z oder z1 1 ist; oder
wobei
Y₆ ist Trifluormethyl, Trifluorethyl, Trifluorpropyl, Trifluorbutyl, Trifluorpentyl, Trifluorhexyl, -0-(Trifluor)methyl, -O-((Tri-, Tetra-, oder Penta)-fluor)ethyl, -O-((Tri-, Tetra-, Penta-, Hexa- oder Heptafluor))propyl, -O-((Tri-, Tetra-, Penta-, Hexa- oder Heptaflu- or)-butyl, -O-((Tri-, Tetra-, Penta-, Hexa- oder Heptafluor)-pentyl, -O-((Tri-, Tetra-, Penta-, Hexa- oder Heptafluor)-hexyl, -OCO-(Trifluor)methyl, -OCO-((Tri-, Tetra-, oder Pentafluor)-ethyl, -OCO-((Tri-, Tetra-, oder Pentafluor)-propyl, -OCO-((Tri-, Tetra-, Penta-, Hexa- oder Heptafluor)-butyl, -OCO-((Tri-, Tetra-, Penta-, Hexa- oder Heptafluor)-pentyl, -OCO-((Tri-, Tetra-, Penta-, Hexa- oder Heptafluor)-)-hexyl,-COO-(Trifluor)methyl, -COO-(Trifluor)ethyl, -COO-((Tri-, Tetra-, Penta-, Hexa- oder Heptafluor)-)-propyl, -COO-((Tri-, Tetra-, Penta-, Hexa- oder Heptafluor)-butyl, -COO-((Tri-, Tetra-, Penta-, Hexa- or Heptafluor)-)-pentyl, -COO-((Tri-, Tetra-, Penta-, Hexa- oder Heptafluor)-)-hexyl,
wenn z oder z1 2 oder 3 ist; und
wobei S₁ und S₂ unabhängig voneinander eine Einfachbindung oder Spacereinheiten darstellen, die geradkettig oder verzweigt sind, substituierte oder unsubstituierte C₁-C₂₄-Alkylene, in denen eine oder mehrere nichtbenachbarte C-Atome, CH- oder CH₂-Gruppen durch eine Einfachbindung, -O-, -O(CO)-, -S-, -(CO)O- oder 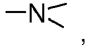 -NR²-, ersetzt sein können, wobei -NR²- ein Wasserstoffatom oder C₁₋C₆ -Alkyl darstellen und wobei der Substituent C₁-C₆-Alkyl ist.

3. Zusammensetzung zur Verwendung in dem Verfahren gemäß Anspruch 1, enthaltend ein Ausrichtungspolymer und ein polymerisierbares Monomer wie in den Ansprüchen 1 oder 2 beschrieben.

4. Ausrichtungsschicht enthaltend mindestens ein Ausrichtungspolymer und ein polymerisierbares Monomer oder eine Zusammensetzung wie in den Ansprüchen 1, 2 oder 3 beschrieben.

5. Verwendung einer Ausrichtungsschicht gemäß Anspruch 4 zur Induktion einer planaren Ausrichtung einer benachbarten Flüssigkristallschicht.

6. Verwendung der Ausrichtungsschicht gemäß Anspruch 4 zur Herstellung einer optischen, elektrooptischen oder optoelektronischen Vorrichtung.

7. Optische, optoelektronische oder elektrooptische Vorrichtungen enthaltend mindestens eine Ausrichtungsschicht wie in Anspruch 4 beschrieben.

8. Optische, optoelektronische oder elektrooptische Vorrichtung gemäß Anspruch 7, wobei die Vorrichtung eine Flüssigkristallvorrichtung ist.

9. Flüssigkristallvorrichtung gemäß Anspruch 8 enthaltend mindestens eine Ausrichtungsschicht wie in Anspruch 4 beschrieben.

## Revendications

1. Procédé pour la préparation d'une couche d'alignement pour l'alignement plan de cristaux liquides dans des dispositifs optiques, optoélectroniques ou électro-optiques, comprenant
- la formation d'une couche sur un substrat par la mise en contact d'une composition comprenant un polymère d'alignement et un monomère polymérisable avec ledit substrat,
- l'irradiation de ladite couche avec une lumière d'alignement, résultant en la formation d'une couche d'alignement,
- la mise en contact de ladite couche d'alignement avec une composition de cristaux liquides ;
- éventuellement l'irradiation de ladite couche d'alignement qui va être en contact avec une composition de cristaux liquides,
- l'assemblage d'une cellule de cristaux liquides, de préférence par utilisation d'au moins une de ladite couche d'alignement et une composition de cristaux liquides,
- l'irradiation de ladite cellule de cristaux liquides ;
dans laquelle ledit polymère d'alignement a au moins une chaîne latérale comprenant au moins un groupe photoréactif choisi dans l'ensemble constitué par un groupe coumarine, un groupe cinnamate, un groupe aromatique substitué ou non substitué, qui est substitué par un groupe éthylène substitué ou non substitué, un groupe chalcone, un groupe stilbène substitué ou non substitué, et un groupe azobenzène ;
et dans lequel ledit monomère polymérisable est bifonctionnel ou multifonctionnel et a une ou plusieurs structures cycliques ou cycliques condensées et des groupes fonctionnels liés directement à la structure cyclique ou à la structure cyclique condensée.

2. Monomère polymérisable de formule 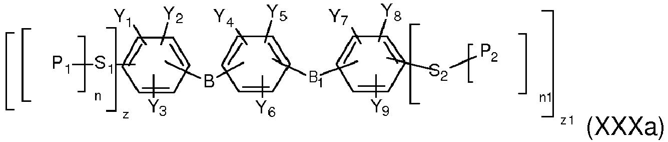
dans laquelle P₁ et P₂, indépendamment l'un de l'autre, sont choisis parmi un hydrogène , un groupe : acrylate, méthacrylate, oxétane, maléinimide, allyle, allyloxy, vinyle, vinylamide, vinyloxy ou époxy, des dérivés d'époxy, butoxy, et un dérivé de butoxy,
B et B₁, indépendamment l'un de l'autre, sont une liaison simple, -CO-C(alcoxy en C₁ à C₆)₂-, -COO-, -OCO-,
n et n₁, indépendamment l'un de l'autre, sont choisi parmi les entiers 1, 2 ou 3,
Y₁, Y₂, Y₃, Y₄, Y₅, Y₇, Y₈, Y₉, indépendamment les uns des autres, sont choisi parmi un hydrogène, un groupe linéaire ou ramifié -alkyle en C₁ à C₁₆ -Y₁₅-alkyle en C₁ à C₁₆ , où Y₁₅ est choisi parmi O, OCO, COO, NHCO, CONH ou OCO, et où le groupe alkyle du groupe -Y₁₅-alkyle en C₁ à C₁₆ ou du groupe alkyle en C₁ à C₁₆ est non substitué ou substitué par au moins un atome de fluor, de chlore ou de brome ; ou di(alkyle en C₁ à C₁₆)amine, alkyloxy en C₁ à C₁₅, nitro, nitrile et/ou un atome de chlore ; et où un ou plusieurs atomes de carbone ou groupes CH- ou CH₂- peuvent, indépendamment les uns des autres, être remplacés par un groupe de liaison ; halogène ou nitrile ; en outre, si le groupe aromatique est substitué, alors il est substitué une ou deux fois, et
Y₆ est un trifluorométhyle, trifluoroéthyle, trifluoropropyle, trifluorobutyle, trifluoropentyle, trifluorohexyle, -O-(trifluoro)méthyle, -O-((tri-, tétra- ou penta-)fluoro)éthyle, -O-((tri-, tétra-, penta-, hexa- ou hepta-fluoro)propyle, -O-(tri-, tétra-, penta-, hexa- ou hepta-fluoro)-butyle, -O-(tri-, tétra-, penta-, hexa- ou hepta-fluoro)-pentyle, -O-(tri-, tétra-, penta-, hexa- ou hepta-fluoro)-hexyle, -OCO-(trifluoro)méthyle, -OCO-(tri-, tétra- ou penta-fluoro)-éthyle, -OCO-(tri-, tétra- ou penta-fluoro)-propyle, -OCO-(tri-, tétra-, penta-, hexa- ou hepta-fluoro)-butyle, -OCO-(tri-, tétra-, penta-, hexa- ou hepta-fluoro)-pentyle, -OCO-(tri-, tétra-, penta-, hexa- ou hepta-fluoro)-hexyle, -COO-(trifluoro)méthyle, -COO-(trifluoro)éthyle, -COO-((tri-, tétra-, penta-, hexa- ou hepta-fluoro)-)-propyle, -COO-(tétra-, penta-, hexa- ou hepta-fluoro)-butyle, -COO-((tri-, tétra-, penta-, hexa- ou hepta-fluoro)-)-pentyle, -COO-((tri-, tétra-, penta-, hexa- ou hepta-fluoro)-)-hexyle,
si z ou z1 vaut 1 ; ou
dans laquelle
Y₆ est un trifluorométhyle, trifluoroéthyle, trifluoropropyle, trifluorobutyle, trifluoropentyle, trifluorohexyle, -O-(trifluoro)méthyle, -O-((tri-, tétra- ou penta-)fluoro)éthyle, -O-((tri-, tétra-, penta-, hexa- ou hepta-fluoro)propyle, -O-(tri-, tétra-, penta-, hexa- ou hepta-fluoro)-butyle, -O-(tri-, tétra-, penta-, hexa- ou hepta-fluoro)-pentyle, -O-(tri-, tétra-, penta-, hexa- ou hepta-fluoro)-hexyle, -OCO-(trifluoro)méthyle, -OCO-(tri-, tétra- ou penta-fluoro)-éthyle, -OCO-(tri-, tétra- ou penta-fluoro)-propyle, -OCO-((tri-, tétra-, penta-, hexa- ou hepta-fluoro)-butyle, -OCO-(tri-, tétra-, penta-, hexa- ou hepta-fluoro)-pentyle, -OCO-(tri-, tétra-, penta-, hexa- ou hepta-fluoro)-hexyle, -COO-(trifluoro)méthyle, -COO-(trifluoro)éthyle, -COO-((tri-, tétra-, penta-, hexa- ou hepta-fluoro)-)-propyle, -COO-(tri-, tétra-, penta-, hexa- ou hepta-fluoro)-butyle, -COO-((tri-, tétra-, penta-, hexa- ou hepta-fluoro)-)-pentyle, -COO-((tri-, tétra-, penta-, hexa- ou hepta-fluoro)-)-hexyle,
si z ou z1 vaut 2 ou 3 ; et
dans laquelle S₁ et S₂, indépendamment l'un de l'autre, sont une liaison simple ou des motifs espaceurs, qui sont un alkylène en C₁ à C₂₄ linéaire ou ramifié, substitué ou non substitué, dans lequel un ou plusieurs atomes de carbone ou groupes CH ou CH₂ non adjacents peuvent être remplacés par une liaison simple, -O-, -O(CO)-, -S-,-(CO)O- ou -N<, -NR²-, où -NR²- représente un atome d'hydrogène ou un alkyle en C₁ à C₆ et dans lequel le substituant est un alkyle en C₁ à C₆.

3. Composition pour une utilisation dans le procédé selon la revendication 1, comprenant un polymère d'alignement et un monomère polymérisable comme décrit dans la revendication 1 ou 2.

4. Couche d'alignement comprenant au moins un polymère d'alignement et un monomère polymérisable ou une composition comme décrit dans la revendication 1, 2 ou 3.

5. Utilisation d'une couche d'alignement selon la revendication 4 pour l'induction d'un alignement plan d'une couche de cristaux liquides adjacente.

6. Utilisation d'une couche d'alignement selon la revendication 4 pour la préparation d'un dispositif optique, électro-optique ou optoélectronique.

7. Dispositif optique, optoélectronique ou électro-optique comprenant au moins une couche d'alignement telle que décrite dans la revendication 4.

8. Dispositif optique, optoélectronique ou électro-optique selon la revendication 7, lequel dispositif est un dispositif à cristaux liquides.

9. Dispositif à cristaux liquides selon la revendication 8, comprenant au moins une couche d'alignement telle que décrite dans la revendication 4.
